# EUROPEAN PATENT APPLICATION

(11) **EP 1 926 338 A1**
(43) Date of publication of application: **28.05.2008**
(21) Application number: 07120408.5
(22) Date of filing: 09.11.2007
(51) Int. Cl.: H04Q 7/38, H04L 12/56

(54) **Mobile radio network control method and device**

(30) Priority: 27.11.2006 JP 2006318810
(71) Applicant: Fujitsu Ltd., Kawasaki-shi, Kanagawa 211-8588 (JP)
(72) Inventor: Kawakami, Hidetoshi, Fukuoka-shi, Fukuoka 814-8588 (JP)
(74) Representative: Stebbing, Timothy Charles

(57) **Abstract**

In a mobile radio network control method and device which can meet a call establishment request of a high-speed user data communication service as much as possible, when a connection call requests a high-speed user data communication service, a maximum resource required for performing a high-speed user data conversion in response to the request is secured. When an occurrence of a channel switchover from a high-speed user data communication state to a low-speed user data communication state is detected during communication, a maximum resource required for performing a low-speed user data conversion in response to the detection is secured and a call reestablishment is performed, and the resource secured for performing the high-speed user data conversion is released.

## Description

The present invention relates to a mobile radio network control method and device, and in particular to a control method and device of a call re-establishment (re-setup) in a W-CDMA mobile radio communication.

In user data (packet) communication using a W-CDMA (Wideband-Code Division Multiple Access) mobile radio system, an HSDPA (High Speed Downlink Packet Access) system which enables a high-speed downlink user data communication is standardized in 3GPP Release 5. Also, an HSUPA (High Speed Uplink Packet Access) system which enables a high-speed uplink user data communication is standardized in 3GPP Release 6. In the following description, "high-speed" indicates the HSDPA system or the HSUPA system, for example.

The above-mentioned HSDPA realizes an efficient high-speed communication while a common channel called an HS-DSCH (High Speed Downlink Shared Channel) is shared by a plurality of user equipments in a time division manner, realizing a downlink maximum transmission rate of 14.4 Mbps. Also, the above-mentioned HSUPA realizes an uplink maximum transmission rate of 5.76 Mbps. In a prior art user data communication system, the total of uplink/downlink transmission rates enhanced along the 3G standard is 2 Mbps.

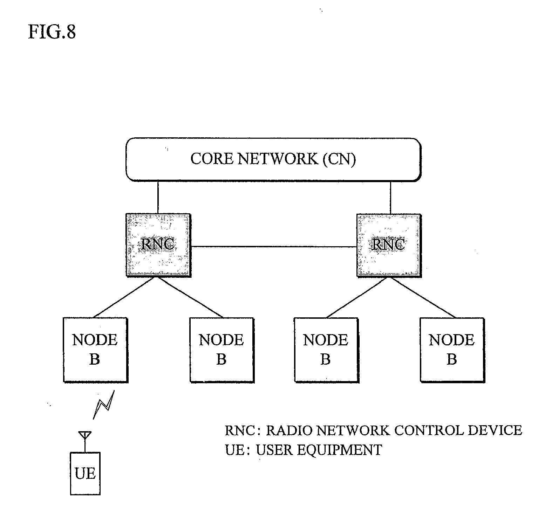

In a general W-CDMA mobile radio system, as shown in Fig.8, a mobile radio network control device (or controller) RNC performs a protocol conversion for user data (U-PLANE) between a core network CN and a user equipment UE on a radio network side through a node B, thereby providing a user data communication service.

Therefore, in order to improve the processing capacity of a portion performing the above-mentioned protocol (user data) conversion as a general means for realizing a high-speed user data communication service, a physical extension of the protocol conversion portion and an addition of a device arrangement are required to be executed.

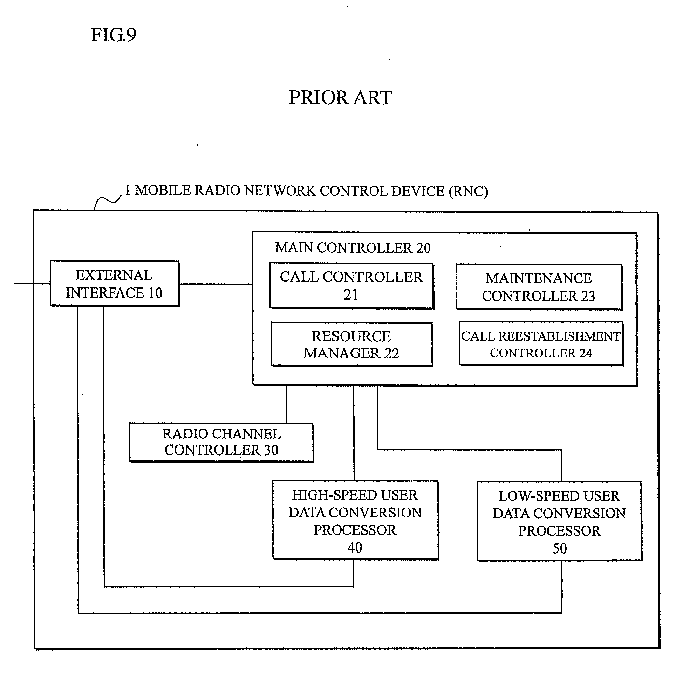

Fig.9 shows a prior art example in which the protocol conversion capacity is thus improved. Each block has the following function:

- External interface 10: External interface with the core network CN; transmitting/receiving control data (C-PLANE)/user data (U-PLANE).

- Main controller 20: Being composed of a call controller 21, a resource manager 22, a maintenance controller 23, and a call reestablishment controller 24; respectively having the following functions:

- Call controller 21: Calculating a card (call) type connected and a resource required upon call connection, and performing a resource acquisition request to the resource manager 22. In a resource acquisition response from the resource manager 22, a call establishment to a high-speed user data conversion processor 40 or a low-speed user data conversion processor 50 is performed, thereby enabling a user data communication.

- Resource manager 22: Receiving the resource acquisition request from the call controller 21 to perform a resource acquisition and to notify a resource acquisition result. Also, for an inquiry of a remaining resource (e.g. available bandwidth on the downlink or uplink), this is extracted and notified as an inquiry result.

- Maintenance controller 23: Controlling a maintenance function.

- Call reestablishment controller 24: Receiving a call reestablishment request from the call controller 21 to perform a call reestablishment control with the high-speed user data conversion processor 40 or the low-speed user data conversion processor 50.

- Radio channel controller 30: Performing a switchover control of radio channels.

- High-speed user data conversion processor 40: Performing the protocol conversion of the high-speed user data (large volumes of U-PLANE data).

- Low-speed user data conversion processor 50: Performing the protocol conversion of the low-speed user data (U-PLANE data).

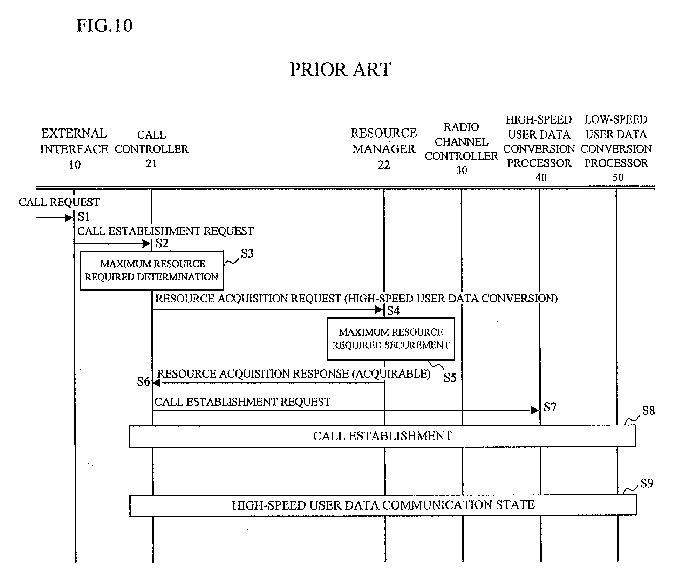

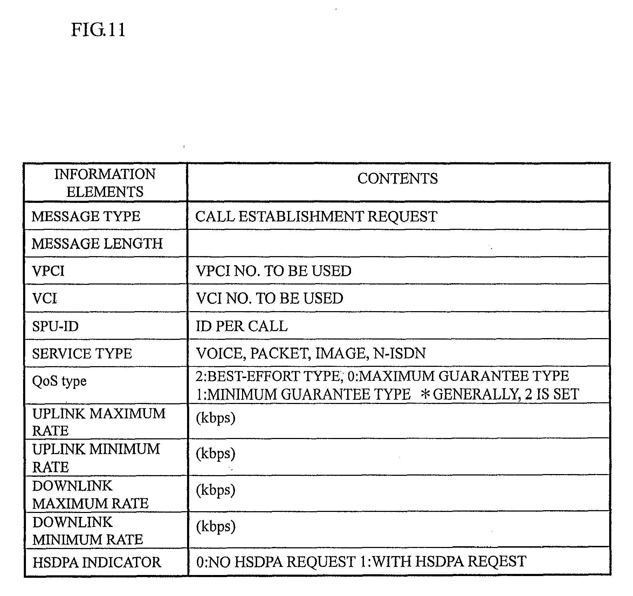

In operation of such a mobile radio network control device (RNC) 1, as shown in the processing sequence of Fig.10, when a call request (at step S1) is made to the external interface 10, the external interface 10 provides a call establishment (setup) request (at step S2) to the call controller 21. The call establishment request has a message format which has been conventionally known as shown in Fig.11.

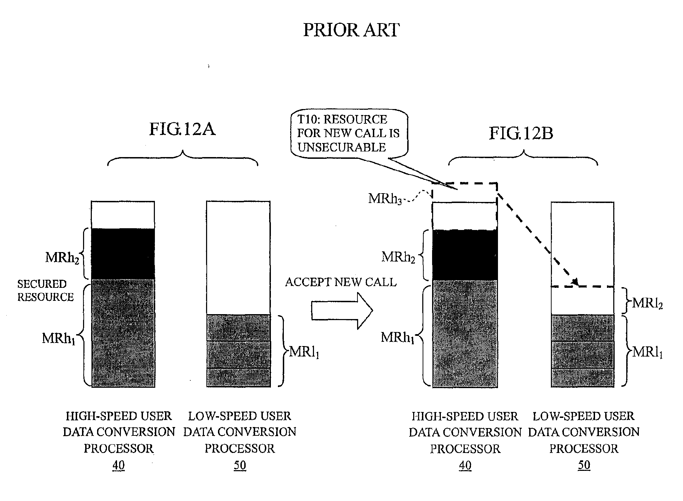

The call controller 21 having received the call establishment request determines a maximum resource required (at step S3). On the assumption that an HSDPA indicator in the call establishment request indicates "1" (HSDPA request), MRh₁, MRh₂, or the like is determined per call establishment as a predetermined maximum resource required for the high-speed user data conversion processor 40, as shown in e.g. Fig.12A. The call controller 21 requests the resource manager 22 to acquire this resource (at step S4). It is to be noted that if the HSDPA indicator indicates "0" (no HSDPA request), DCH (individual channel for high speed), FACH (or RACH) (common channel for low speed), or PCH (channel used in a radio communication state) is selected.

Receiving the resource acquisition request, the resource manager 22 secures the resource MRh₁ or MRh₂ per call establishment as shown in Fig.12A (at step S5). The response thereto is returned to the call controller 21 (at step S6), which then transmits the call establishment request to the high-speed user data conversion processor 40 (at step S7).

Thereafter, a call establishment process generally known is executed (at step S8), so that the high-speed user data communication service is executed (at step S9).

Call re-establishment is manually performed by a maintenance person. When the maintenance person manually provides the call reestablishment request to the call controller 21 through the maintenance controller 23, the call controller 21 further provides the call reestablishment request to the call reestablishment controller 24, thereby switching the processors 40 and 50 in charge of data processing of a single call.

It is to be noted that there is known a radio communication system in which a mobile station device detects a reception quality value of a known signal transmitted from a base station device to be reported, the base station device has a quality faulty signal generator generating a quality faulty signal when the reception quality value is compared with a predetermined threshold and the reception quality value is equal to or less than the predetermined threshold, and a quality faulty signal reporting portion which reports the quality faulty signal and an identifier of the concerned mobile station device to a base station control device, and the base station control device has a control signal transmitter transmitting a control signal so that a data transmission by the HSDPA for the mobile station device is switched over to a data transmission by DPCH (see e.g. patent document 1).
[ Patent document 1 ] Japanese Patent Application Laid-open No.2004-328521

As mentioned above, when a call connection request is made from a user requesting the high-speed user data communication service, a resource for satisfying a band/processing capacity requested upon call connection is secured by the portion (high-speed user data conversion processor) performing the protocol conversion of the high-speed user data communication and the protocol conversion of the user data is performed, thereby enabling the high-speed user data communication service to be provided.

On the other hand, when a new call establishment is performed by the high-speed user data communication service, a securement of a maximum resource MRh₃, as shown in Fig.12B, is required. However, the maximum resource MRh₃ cannot be secured (at step T10) due to the band/processing capacity which the high-speed user data conversion processor holds. Therefore, in order to maintain the call connection, the portion (low-speed user data conversion processor) performing the protocol conversion of the prior art low-speed user data communication is applied, so that a maximum resource MRl₂ is secured to execute the protocol conversion of the user data.

Accordingly, despite the user's request of the high-speed user data communication service, only the user data communication service up to a communication rate which can be processed by the prior art low-speed user data communication system is provided, thereby preventing the requested service from being provided to the user.

In future, increasing numbers of users who desire the high-speed user data communication service and a data communication amount to be used are predicted according to an introduction of the high-speed user data communication service. Therefore, it is anticipated that problems as mentioned above will increase.

It is accordingly desirable to provide a mobile radio network control method and device which can meet a call establishment request of a high-speed user data communication service as much as possible.

A mobile radio network control method (or device) according to the present invention comprises: a first step of (or portion) securing, when a connection call requests a high-speed user data communication service, a maximum resource required for performing a high-speed user data conversion in response to the request; a second step of (or portion) securing, when an occurrence of a channel switchover from a high-speed user data communication state to a low-speed user data communication state is detected during communication, a maximum resource required for performing a low-speed user data conversion in response to the detection and of performing a call reestablishment; and a third step of (or portion) releasing the resource secured for performing the high-speed user data conversion.

Namely, in the present invention, when a call connection requesting the high-speed user data communication service is performed, a maximum resource required is calculated based on rate/band information or the like requested upon connection, and the resource (e.g. burst allocation) required for the high-speed user data conversion is secured to perform a protocol conversion.

Thereafter, when a channel switchover occurs transitioning from a communication state where the high-speed user data conversion has been performed to a communication state except the high-speed data communication state, the maximum resource required for the low-speed user data conversion is secured for re-establishing a call to be serviced for the existing low-speed user data conversion, so that the resource for the high-speed user data conversion is released, thereby switching over the resources.

Thereafter, when the channel state of the object call of the high-speed user data communication service is further returned to the high-speed user data communication state, the call reestablishment to the high-speed user data conversion is performed, so that the protocol conversion using the resource for the high-speed user data conversion is performed.

At the above-mentioned second step (or portion), a remaining resource in a state where the high-speed user data conversion is performed may be determined when the resource for performing the low-speed user data conversion is secured, and only when the remaining resource is equal to or less than the maximum resource, the maximum resource required for performing the low-speed user data conversion may be secured and the call reestablishment may be performed.

Namely, in the presence of a resource to spare for the high-speed user data conversion being presently done, it is unnecessary to secure the resource for the low-speed user data conversion and to perform the call re-establishment.

Furthermore, at the above-mentioned fourth step (or portion), the call reestablishment may be performed when the resource for performing the high-speed user data conversion, which has been insufficient, becomes or turns to be sufficient.

Also, the above-mentioned high-speed user data communication service may comprise e.g. DSCH, and the low-speed user data communication service may comprise e.g. DCH, FACH, RACH, or PCH.

It is to be noted that the present invention can accommodate both directions of the uplink (HSUPA) and downlink (HSDPA) in the high-speed user data communication service.

The following effects can be achieved by the present invention:

Compared with the prior art, the resources of the high-speed user data conversion processor can be effectively used even if the equipment is the same, thereby enabling an executing rate of the high-speed user data communication service to be increased.

A call in a state except the high-speed user data communication state is re-established so as to be processed by the low-speed user data conversion processor, so that a free resource in the high-speed user data conversion is positively secured, thereby enabling a resource for performing the high-speed user data communication to be easily secured.

Even when the state except the high-speed user data communication state transitions to the high-speed user data communication state, the call to the high-speed user data conversion is dynamically re-established, thereby enabling the high-speed user data communication.

When a state other than the high-speed user data communication state transitions to the high-speed user data communication state, a reestablishment control is performed, when a free resource has been obtained, also to a call to which the high-speed user data communication has been unable to be performed in the absence of free resources for the high-speed user data conversion, thereby enabling the high-speed user data communication to be executed.
The above and other advantages of the invention will be apparent upon consideration of the following detailed description, taken in conjunction with the accompanying drawings, in which the reference numerals refer to like parts throughout and in which:
Fig.1 is a block diagram showing an arrangement of a mobile radio network control device according to embodiments of the present invention;
Fig.2 is a diagram showing a processing sequence of an operational embodiment [1] of the arrangement of the present invention shown in Fig.1;
Figs.3A-3C are diagrams illustrating an operation (call reestablishment of high speed → low speed) of the operational embodiment [1] shown in Fig. 2;
Fig.4 is a diagram showing a processing sequence of an operational embodiment [2] of the arrangement of the present invention shown in Fig.1;
Figs.5A-5C are diagrams illustrating an operation (call reestablishment of low speed → high speed) of the operational embodiment [2] shown in Fig.4;
Fig.6 is a diagram showing a processing sequence of an operational embodiment [3] of the arrangement of the present invention shown in Fig.1;
Fig.7 is a diagram showing a processing sequence of an operational embodiment [4] of the arrangement of the present invention shown in Fig.1;
Fig.8 is a diagram showing a network arrangement in a general W-CDMA mobile radio system;
Fig.9 is a block diagram showing a prior art mobile radio network control device;
Fig.10 is a diagram showing a processing sequence of the prior art example shown in Fig. 9;
Fig.11 is a diagram showing a format of a call establishment request message which has been known; and
Figs.12A and 12B are block diagrams for illustrating problems of the prior art example.

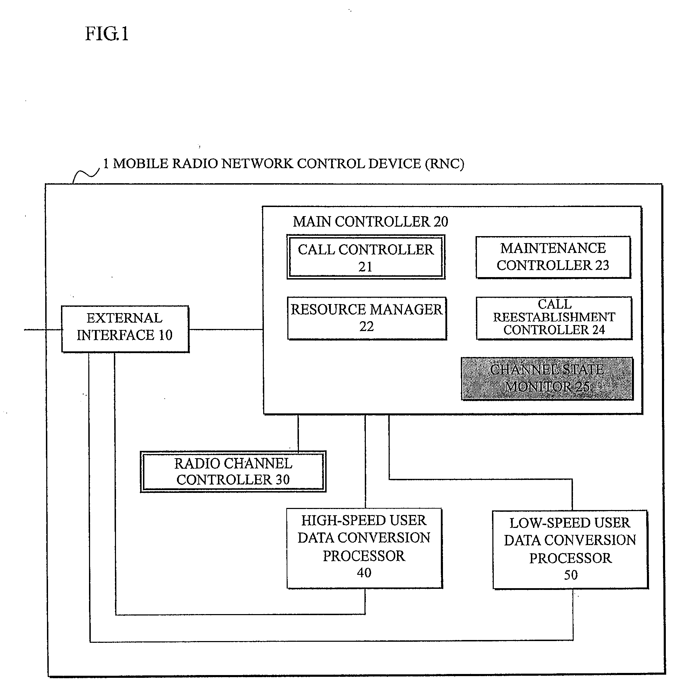

Fig.1 shows an arrangement of a mobile radio network control device used for executing the mobile radio network control method according to embodiments of the present invention. This arrangement is different from the prior art example shown in Fig.9 in that a channel state monitor 25 is newly added, and the call controller 21 and the radio channel controller 30 are improved.

When receiving a channel state change notification from the radio channel controller 30, the channel state monitor 25 notifies a channel state change to the call controller 21. When the channel state change notification indicates a transition from the high-speed data communication state to the state except the high-speed data communication state, the channel state monitor 25 inquires the remaining resource of the high-speed user data conversion processor 40 of the resource manager 22 to determine the presence/absence of the channel state change notification to the call controller 21 based on the remaining resource, e.g., unallocated bandwidth in the system.

Hereinafter, operational embodiments (features) of the arrangement shown in Fig.1 will be described.

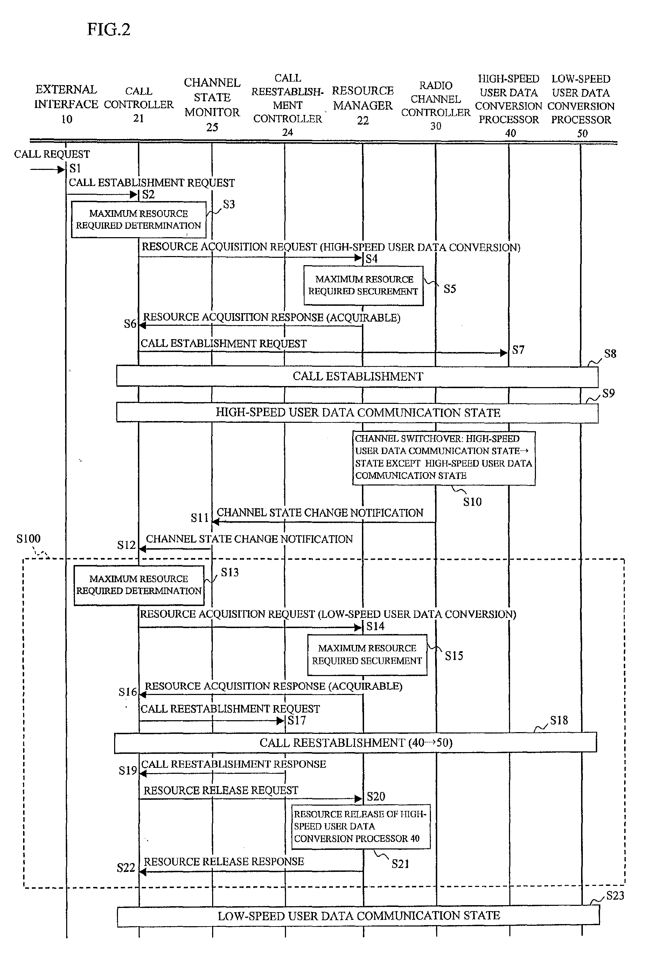

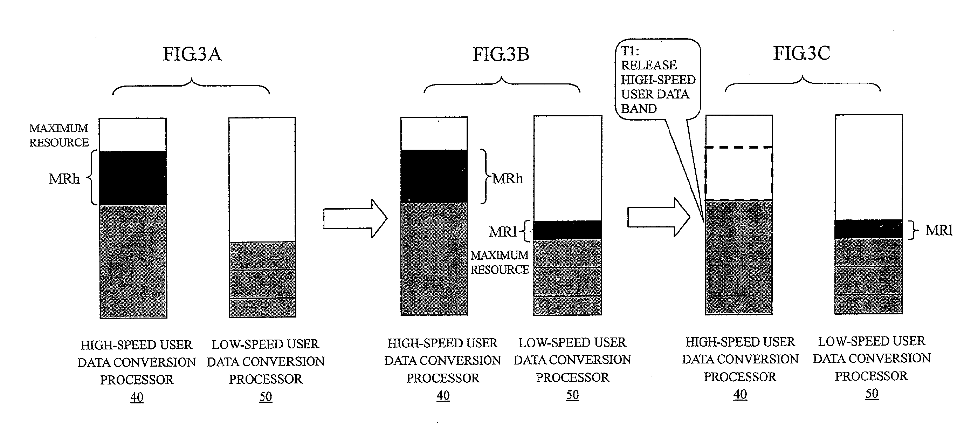

### I. Operational embodiment [1]: Figs. 2 and 3A-3C (call reestablishment of high-speed → low speed)

When a call request from a user (UE) requesting the high-speed user data communication service and a call establishment request are made (at steps S1 and S2), the call controller 21 extracts a value concerning a resource securing amount from the call establishment request to determine a maximum resource required for a call connection (at step S4). Accordingly, the maximum resource may depend on each call.

This is, as shown in Fig.3A, the maximum resource MRh which should be preset to a single call for the high-speed user data conversion.

After determining the resource required, the call controller 21 selects the high-speed user data conversion processor 40 as a card type for the resource manager 22, and notifies a resource acquisition request with the resource required being made added information (at step S5). When receiving the resource acquisition request from the call controller 21 (at step S4), the resource manager 22 extracts the remaining resource of the high-speed user data conversion processor 40 which becomes an object to determine whether or not the request resource is securable. When the resource required is acquirable (at step S5), a resource acquisition response with the high-speed user data conversion processor 40 being made the secured card type is notified to the call controller 21 (at step S6).

When receiving the resource acquisition response from the resource manager 22 indicating "acquirable" (at step S6), the call controller 21 makes the high-speed user data conversion processor 40 execute the call establishment based on the designated card type (at steps S7 and S8). Furthermore, the call controller 21 enables a data communication when subsequent user data is received from the core network CN (at step S9). The sequence so far is basically the same as the processing sequence of the prior art example shown in Fig.10.

Thereafter, when the transition from the high-speed user data communication state to the state except the high-speed user data communication state (channel switchover) is detected at the radio channel controller 30, the channel state change is notified to the channel state monitor 25 (at step S11).

The contents of the channel state change notification when a channel switchover occurs due to increase or decrease of the user data amount are as follows:

- Channel state change notification of the radio channel controller 30 → the channel state monitor 25: channel state is notified;

- Channel state change notification of channel state monitor 25 → call controller 21: switchover of high speed→low speed or low speed→high speed is notified.

As an example, the case where the channel switchover of HS-DSCH (high speed) → FACH (low speed) occurs will now be described:

1) Channel state change notification (channel state: FA) is notified from the radio channel controller 30 to the channel state monitor 25;

2) When the channel state monitor 25 holds the channel state presently used and the switchover from the notified channel state to HS-DSCH → FACH/RACH/PCH or FACH/RACH/PCH→HS-DSCH is performed, the channel state change notification is transmitted to the call controller 21. In this embodiment, due to the switchover of DSCH → FACH, the channel state change notification (high speed → low speed) is transmitted to the call controller;

3) The call controller 21 calculates the resource required based on the notification of "high speed → low speed", and makes the resource acquisition request. It is to be noted that the same applies to not only the downlink direction but also the uplink direction of the HSUPA.

The channel state monitor 25 having received the channel state change notification notifies the channel state change to the call controller 21 (at step S12). The call controller 21 having received the channel state change notification determines a maximum resource required for using non-HS-DSCH (low speed) (at step S13). The maximum resource required at this time is a maximum required resource MR1 for the low-speed user data conversion processor 50, as shown in Fig.3B. The call controller 21 selects the low-speed user data conversion processor 50 as the card type for the resource manager 22, and notifies the resource acquisition request with the resource required being made the added information (at step S14). It is to be noted that the maximum required resource MRh secured by the high-speed user data conversion processor 40 at this time is left as it is.

When receiving the resource acquisition request from the call controller 21 (at step S14), the resource manager 22 extracts the remaining resource of the low-speed user data conversion processor 50 to determine whether or not the request maximum resource is securable or acquirable (at step S15). When the resource is acquirable, the resource acquisition response is notified to the call controller 21 with the low-speed user data conversion processor 50 being made the secured card type (at step S16).

When receiving the resource acquisition response from the resource manager 22 (at step S16), the call controller 21 notifies to the call reestablishment controller 24 the call reestablishment request to the low-speed user data conversion processor 50 from the high-speed user data conversion processor 40 which presently secures the resource (at step S17).

When receiving the call reestablishment request from the call controller 21 (at step S17), the call reestablishment controller 24 performs the reestablishment of a designated call from the high-speed user data conversion processor 40 of the reestablishment source to the low-speed user data conversion processor 50 of the reestablishment destination (at step S18), and notifies the call reestablishment response to the call controller 21 (at step S19).

When receiving the call reestablishment response from the call reestablishment controller 24 (at step S19), the call controller 21 requests the resource manager 22 to release the resource which has been acquired by the high-speed user data conversion processor 40 (at step S20). The resource manager 22 having received the request releases the resource MRh as shown by the dotted line in Fig.3C (at step S21; at step T1).

Thus, the high-speed user data conversion processor 40 can secure the resource in preparation for a high-speed user data communication service request for another call. Thereafter, the resource manager 22 returns a resource release response to the call controller 21 (at step S22), and transitions to the low-speed user data communication state (at step S23).

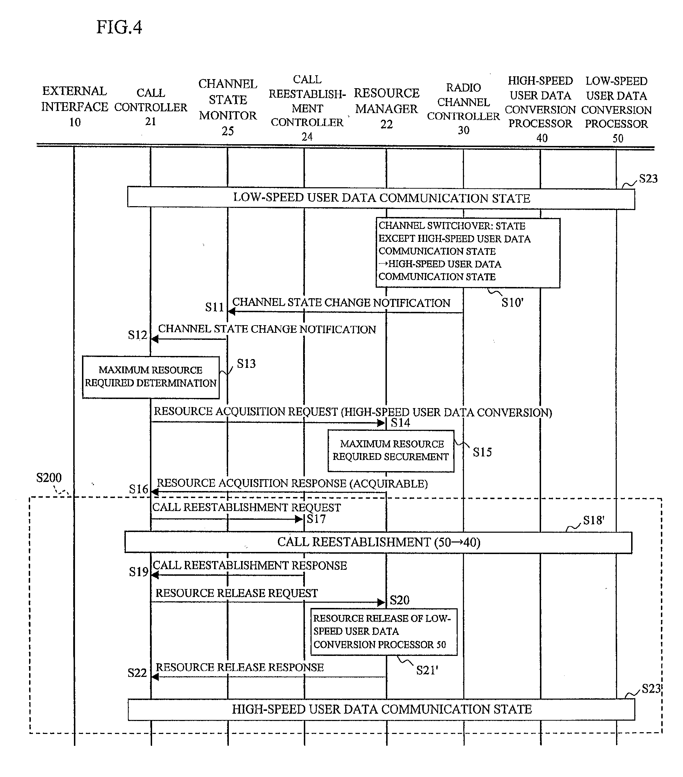

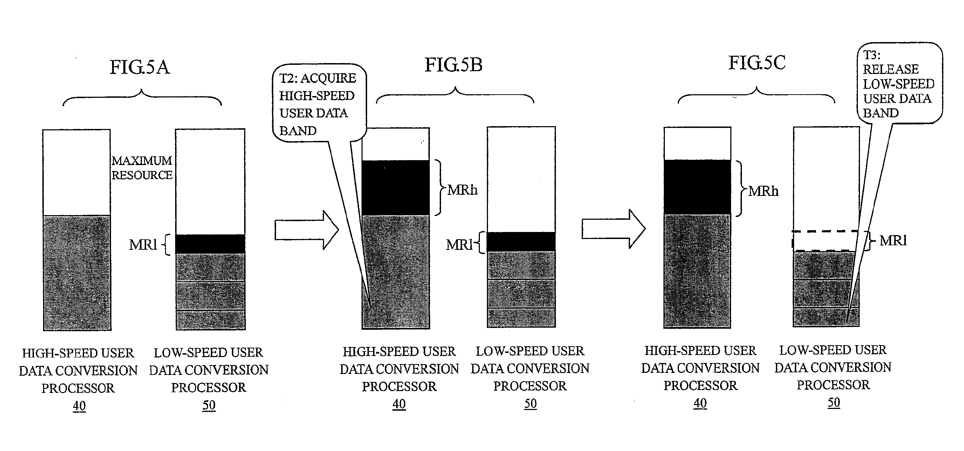

### II. Operational embodiment [2]: Figs.4 and 5A-5C

### (call reestablishment of low speed→high speed)

This embodiment is an operation executed subsequent to the low-speed user data communication state (at step S23) of the above-mentioned embodiment [1]. It is supposed that the high-speed user data conversion processor 40 and the low-speed user data conversion processor 50 are now securing the resources shown in Fig.5A.

Firstly, when detecting the transition from the state except the high-speed data communication state to the high-speed data communication state in the low-speed user data communication service state (at step S10'), the radio channel controller 30 notifies the channel state change to the channel state monitor 25 (at step S11). The channel state monitor 25 having received the channel state change notification further notifies the channel state change to the call controller 21 (at step S12). These notifications are the same as those described in the above-mentioned embodiment [1].

The call controller 21 having received the channel state change notification determines the maximum resource required for using the HS-DSCH with the present call (at step S13), selects the high-speed user data conversion processor 40 as the card type for the resource manager 22, and notifies the resource acquisition request with the resource required being made the added information (at step S14). At this time, as shown in Fig.5B, the resource of the low-speed user data conversion processor 50 is left as it is, and the maximum resource MRh is determined for the resource of the high-speed user data conversion processor 40.

When receiving the resource acquisition request from the call controller 21 (at step S14), the resource manager 22 extracts the remaining resource of the high-speed user data conversion processor 40 to determine whether or not the request resource is securable or acquirable (at step S15). When the resource is acquirable (at step T2), the resource acquisition response is notified to the call controller 21 with the high-speed user data conversion processor 40 as the card type (at step S16).

When receiving the resource acquisition response from the resource manager 22 (at step S16), the call controller 21 notifies to the call reestablishment controller 24 the call reestablishment request from the low-speed user data conversion processor 50 which presently secures the resource to the high-speed user data conversion processor 40 (at step S17).

When receiving the call reestablishment request from the call controller 21 (at step S17), the call reestablishment controller 24 performs the reestablishment of the designated call from the low-speed user data conversion processor 50 of the reestablishment source to the high-speed user data conversion processor 40 of the reestablishment destination (at step S18'), and notifies the call reestablishment response to the call controller 21 (at step S19).

When receiving the call reestablishment response from the call reestablishment controller 24 (at step S19), the call controller 21 requests the resource manager 22 to release the resource which has been acquired by the low-speed user data conversion processor 50 (at step S20). Thus, the resource manager 22 releases the resource MRI as shown by the dotted line in Fig.5C (at step S21'; at step T3). Thus, the low-speed user data conversion processor 50 secures the resource for the low-speed user data communication service request. Thereafter, the resource manager 22 returns the resource release response to the call controller 21 (at step S22).

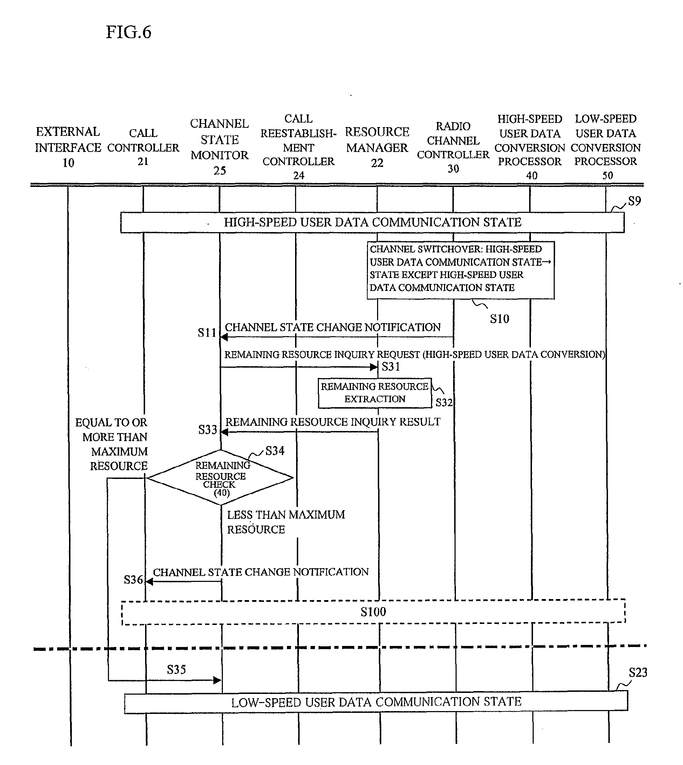

### III. Operational embodiment [3]: Fig.6

This embodiment is premised on being executed subsequent to the high-speed user data communication state (at step S9) of the above-mentioned embodiment [1].

Firstly, when detecting the transition from the high-speed user data communication state to the state except the high-speed user data communication state (at step S10), the radio channel controller 30 notifies the channel state change to the channel state monitor 25 (at step S11) in the same way as the above-mentioned embodiments. The channel state monitor 25 having received the channel state change notification inquires the remaining resource of the high-speed user data conversion processor 40 of the resource manager 22 (at step S31). The resource inquired in this case indicates the resource at the processor 40 presently operating, and is different from the resource to be secured in the above-mentioned embodiments.

When receiving the inquiry of the remaining resource of the high-speed user data conversion processor 40 from the channel state monitor 25 (at step S31), the resource manager 22 extracts the remaining resource (at step S32), and notifies the inquiry result to the channel state monitor 25 (at step S33).

When receiving the inquiry result from the resource manager 22 (at step S33), the channel state monitor 25 determines whether or not the remaining resource is equal to or more than the maximum resource which should be secured by the present call for the concerned high-speed user data conversion processor 40 (at step S34). As a result, in case remaining resource ≧ maximum resource, it is determined that the presently secured resource is continuously available, so that neither the channel state change notification to the call controller 21 (at step S35) nor the call reestablishment is performed. In case remaining resource < maximum resource, the channel state change notification is performed to the call controller 21 (at step S36), so that processing (at step S100) surrounded by a dotted line in Fig.2 which indicates the embodiment [1] is executed.

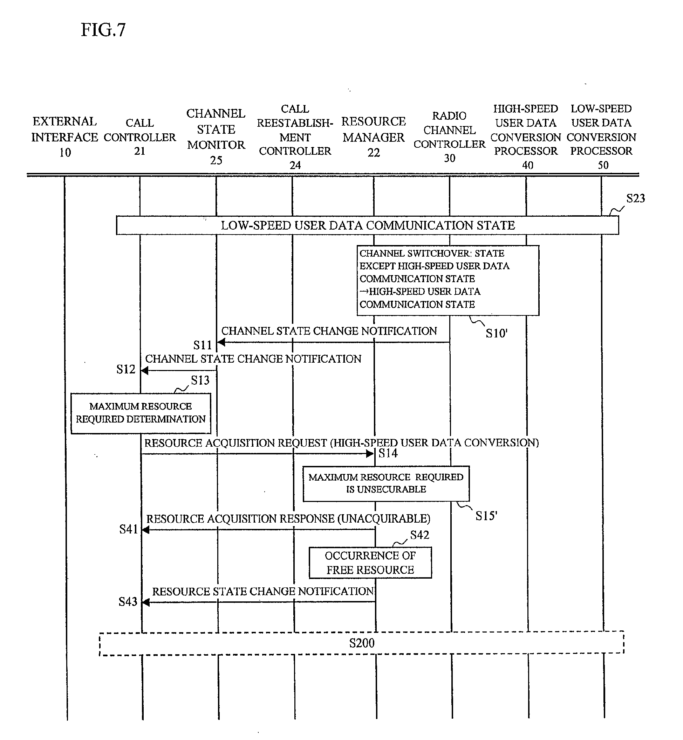

### IV Embodiment [4]: Fig.7

This embodiment is executed subsequent to the low-speed user data communication state of step S23 in the same way as the above-mentioned embodiment [2]. After steps S10', S11, S12, and S13 are similarly executed, the call controller 21 makes the resource acquisition request to the resource manager 22 at step S14. As a result, when it is found that the maximum resource required can not be secured (at step S15'), the call controller 21 receives "unacquirable" as the resource acquisition response from the resource manager 22 (at step S41). At this time, it is determined that the call reestablishment to the high-speed user data conversion processor 40 is disabled, so that the call reestablishment or the like (at steps S17-S22 in Fig.2) is not performed.

At this time, when the resource of the high-speed user data conversion processor 40 has a free resource (at step S42), the resource manager 22 notifies to the call controller 21 the resource state change with the free resource being made the added information (at step S43).

When receiving the resource state change notification from the resource manager 22 (at step S43), the call controller 21 performs processing (at step S200) surrounded by the dotted line in Fig.4 which indicates the embodiment [2], if determining based on the free resource that the call reestablishment to the high-speed user data conversion processor 40 is possible.

It is to be noted that the present invention is not limited by the above-mentioned embodiments, and it is obvious that various modifications may be made by one skilled in the art based on the recitation of the claims.

## Claims

1. A mobile radio network control method comprising:
a first step of securing, when a connection call requests a high-speed user data communication service, a maximum resource required for performing a high-speed user data conversion in response to the request;
a second step of securing, when an occurrence of a channel switchover from a high-speed user data communication state to a low-speed user data communication state is detected during communication, a maximum resource required for performing a low-speed user data conversion in response to the detection and of performing a call reestablishment; and
a third step of releasing the resource secured for performing the high-speed user data conversion.

2. The mobile radio network control method as claimed in claim 1, further comprising a fourth step of securing, when an occurrence of a channel switchover from the low-speed user data communication state to the high-speed user data communication state is detected during communication, the maximum resource required for performing the high-speed user data conversion and of performing the call reestablishment; and
a fifth step of releasing the resource secured for performing the low-speed user data conversion.

3. The mobile radio network control method as claimed in claim 1 or 2, wherein the second step includes a step of determining a remaining resource in a state where the high-speed user data conversion is performed when securing the resource for performing the low-speed user data conversion, and of securing, only when the remaining resource is equal to or less than the maximum resource, the maximum resource required for performing the low-speed user data conversion and of performing the call reestablishment.

4. The mobile radio network control method as claimed in claim 2, wherein the fourth step includes a step of performing the call reestablishment when the resource for performing the high-speed user data conversion, which has been insufficient, becomes sufficient.

5. The mobile radio network control method as claimed in any preceding claim, wherein the high-speed user data communication service comprises DSCH, and the low-speed user data communication service comprises DCH, FACH, RACH or PCH.

6. A mobile radio network control device comprising:
a first portion arranged to secure, when a connection call requests a high-speed user data communication service, a maximum resource required for performing a high-speed user data conversion in response to the request;
a second portion arranged to secure, when an occurrence of a channel switchover from a high-speed user data communication state to a low-speed user data communication state is detected during communication, a maximum resource required for performing a low-speed user data conversion in response to the detection and performing a call reestablishment; and
a third portion arranged to release the resource secured for performing the high-speed user data conversion.

7. The mobile radio network control device as claimed in claim 6, further comprising a fourth portion for securing, when an occurrence of a channel switchover from the low-speed user data communication state to the high-speed user data communication state is detected during communication, the maximum resource required for performing the high-speed user data conversion and performing the call reestablishment; and
a fifth portion for releasing the resource secured for performing the low-speed user data conversion.

8. The mobile radio network control device as claimed in claim 6 or 7, wherein the second portion includes a portion for determining a remaining resource in a state where the high-speed user data conversion is performed when securing the resource for performing the low-speed user data conversion, and for securing, only when the remaining resource is equal to or less than the maximum resource, the maximum resource required for performing the low-speed user data conversion and performing the call reestablishment.

9. The mobile radio network control device as claimed in claim 7, wherein the fourth portion includes a portion for performing the call reestablishment when the resource for performing the high-speed user data conversion, which has been insufficient, becomes sufficient.

10. The mobile radio network control device as claimed in any of claims 6 to 9, wherein the high-speed user data communication service comprises DSCH, and the low-speed user data communication service comprises DCH, FACH, RACH or PCH.
